# EUROPÄISCHE PATENTSCHRIFT

(11) **EP 3 689 581 B1**
(45) Veröffentlichungstag und Bekanntmachung des Hinweises auf die Patenterteilung: **29.06.2022**
(21) Anmeldenummer: 20167266.4
(22) Anmeldetag: 02.12.2016
(51) Int. Cl.: B29C 64/124, B29C 64/245, B29C 64/255, B29C 64/264, B29C 64/295, B33Y 10/00, B33Y 30/00, B01F 33/45, B01F 35/90

(54) **ADDITIVE FERTIGUNGSEINRICHTUNG**
ADDITIVE MANUFACTURING DEVICE
DISPOSITIF DE FABRICATION ADDITIVE

(30) Priorität: 04.12.2015 CH 17712015
(43) Veröffentlichungstag der Anmeldung: 05.08.2020
(62) Teilanmeldung aus: 16816175.0
(73) Patentinhaber: Schmid, Marco, 9496 Balzers (LI); Schmid, Dieter, 9496 Balzers (LI)
(72) Erfinder: Schmid, Marco, 9496 Balzers (LI); Schmid, Dieter, 9496 Balzers (LI)
(74) Vertreter: Riederer Hasler & Partner Patentanwälte AG

(56) Entgegenhaltungen:
- EP-A1- 0 484 086
- CN-Y- 201 070 836
- US-A1- 2007 075 461

## Beschreibung

### Gebiet der Erfindung

Die Erfindung betrifft eine additive Fertigungsvorrichtung zur schichtweisen Herstellung von dreidimensionalen Objekten aus einer polymerisierbaren (vernetzbar) Flüssigkeit gemäss Oberbegriff des Anspruchs 1 sowie ein Verfahren zur schichtweisen Herstellung von dreidimensionalen Objekten aus einer polymerisierbaren Flüssigkeit gemäss Oberbegriff des Anspruchs 89.

### Stand der Technik

Der Stand der Technik im Bereich der additiven Fertigungsvorrichtungen wird momentan durch zwei Vorrichtungen und den damit in Verbindung stehenden Fertigungsverfahren gebildet.

Im sogenannten Top-Down-Verfahren umfasst die additive Fertigungsvorrichtung eine Wanne, in welcher ein UV-härtbares Harz aufgegeben ist. Das schichtweise aufzubauende Objekt wird am Oberflächenspiegel des Harzes Schicht für Schicht aufgebaut. Dabei wird die Oberfläche des Harzes mit einer UV-Lichtquelle in der Gestalt der Schicht bestrahlt, welche aufgebaut werden soll. Dadurch härtet die Schicht in der gewünschten Gestalt an der Oberfläche des Harzes aus. Das Objekt wird auf einer Bauplattform aufgebaut, wobei die Plattform von der Oberfläche des Harzes wegbewegt wird, solange bis das Objekt fertig Schicht für Schicht aufgebaut ist. Das Top-Down-Verfahren hat den Vorteil, dass keine Verschleissteile vorhanden sind. Wegen der an der Harzoberfläche vorhandenen Oberflächenspannung ist die Konturgenauigkeit der mit dem Top-Down-Verfahren hergestellten Objekte jedoch beschränkt. Da die Oberfläche des Harzes keine definierte Oberfläche darstellen kann, ist die Oberfläche jeder Schicht zwangsläufig relativ ungenau.

Um die Konturgenauigkeit der Objekte zu verbessern, wurde das sogenannte Bottom-Up-Verfahren entwickelt. Dabei werden die aufzubauenden Objektschichten nicht an der Harzoberfläche sondern am Boden einer Harzwanne aufgebaut. Da das Objekt aufgebaut wird, indem die Plattform vom Boden der Harzwanne nach oben weg bewegt wird, ist es ausreichend, wenn im Vergleich zum Top-Down-Verfahren eine geringe Menge Harz in der Wanne vorhanden ist. Der Boden muss mit Harz bedeckt sein, damit das Harz zwischen Boden und Objekt jederzeit nachfliesen kann, um eine Schicht aufzubauen. Die UV-Lichtquelle ist unterhalb des Bodens angeordnet, weshalb dieser für das UV-Licht durchgängig sein muss.

Um jede ausgehärtete Schicht vom Boden ablösen zu können, muss der Boden mit einer Trennschicht versehen sein. Die Trennschicht stellt eine definierte Oberfläche für jede ausgehärtete Objektschicht dar. Dadurch besitzt das im Bottom-Up-Verfahren hergestellte Objekt eine hohe Massgenauigkeit. Die Trennschicht wird jedoch bei jedem Ablösen einer ausgehärteten Schicht mechanisch belastet und ist daher ein Verschleissteil, das immer wieder durch eine neue Trennschicht ersetzt werden muss. Ein weiterer Nachteil besteht darin, dass als Baumaterial nur einfache Harze verwendbar sind, da sich Harze mit Füllstoffen in dieser Vorrichtung nicht homogenisieren lassen und Harze mit erhöhten Viskositäten nicht verarbeiten lassen.

Aus der EP 0 484 086 A1 ist eine additive Fertigungsvorrichtung bekannt, bei welcher das Ablösen von der Trennschicht verbessert ist. Es ist eine semipermeable Membran an einem Rahmen aufgespannt, wobei der Rahmen in eine fotoaushärtende Flüssigkeit getaucht ist. Die Flüssigkeit kann die Membran nicht durchdringen. An der Unterseite der Membran werden einzelne Schichten der Flüssigkeit durch Bestrahlung mit einer Strahlungsquelle ausgehärtet. In dem Rahmen ist ein adhäsionshemmendes Material aufgegeben, welches die Membran durchdringen kann und dadurch eine Adhäsion der ausgehärteten Schicht an der Membran verhindert.

In der EP 0 467 100 A1 ist eine additive Fertigungsvorrichtung offenbart, bei welcher ein dreidimensionales Objekt in Schichten zwischen einer transparenten Barriereplatte und einem Objekttisch aufgebaut wird. Der Objekttisch ist in einem mit der auszuhärtendenden Flüssigkeit gefüllten Reaktor positioniert. Die Platte ist an der Oberfläche der Flüssigkeit positioniert. Die Platte wird von oben einer Strahlung ausgesetzt, welche dazu führt, dass unmittelbar an der unteren Seite der Platte die Flüssigkeit zu einer Schicht mit definierten Aussenkonturen ausgehärtet wird. Mit Hilfe einer Rütteleinrichtung wird die Platte in Vibration versetzt, wodurch sie sich von der ausgehärteten Schicht des dreidimensionalen Objekts lösen lässt. Der Objekttisch wird dann um die Schichtdicke der nächsten Objektschicht abgesenkt, wodurch Flüssigkeit zwischen die Platte und die oberste ausgehärtete Schicht nachfliessen kann. Dann wird die nächste Schicht ausgehärtet, solange bis das dreidimensionale Objekt fertig gestellt ist. Die Vorrichtung ermöglicht es, dass die ausgehärteten Objektschichten schonend von der Platte gelöst werden können. Dadurch sind detailgetreue und exakte Objekte herstellbar. Allerdings gestaltet sich der Wechsel unterschiedlicher unter Strahlung aushärtbarer Flüssigkeiten, wenn überhaupt möglich, sehr aufwendig.

### Aufgabe der Erfindung

Aus den Nachteilen des beschriebenen Stands der Technik resultiert die die vorliegende Erfindung initiierende Aufgabe eine gattungsgemässe additive Fertigungsvorrichtung weiterzuentwickeln, welche die oben beschriebenen Nachteile nicht aufweist. Ein weiteres Ziel ist es, eine möglichst flexible additive Fertigungsvorrichtung vorzuschlagen, welche eine grosse Anzahl von unterschiedlichen Funktionsmaterialien als Werkstoffe bzw. Baumaterialien, unter anderem Mehrkomponenten-Materialien, verarbeiten kann und die Möglichkeit zu schaffen, die in der additiven Fertigungsvorrichtung eingesetzten Baumaterialen mit einer optimalen Prozesstemperatur zu verarbeiten.

### Beschreibung

Die additive Fertigungsvorrichtung umfasst eine Wanne mit einem Boden. An der Unterseite des Bodens ist eine Temperierungseinheit zur Temperatureinstellung der polymerisierbaren Flüssigkeit angeordnet. Die Verarbeitungsparameter der Flüssigkeit können daher individuell an die Flüssigkeitseigenschaften angepasst werden. Insbesondere kann die Viskosität der Flüssigkeit auf einen Wert eingestellt werden, bei welchem sie sich besonders gut zu Schichten polymerisieren lässt. Die Aufgabe wird durch eine Vorrichtung gemäss Anspruch 1 und durch ein Verfahren gemäss Anspruch 8 gelöst.

Die Lösung der gestellten Aufgabe gelingt bei einer additiven Fertigungsvorrichtung zur schichtweisen Herstellung von dreidimensionalen Objekten aus einer polymerisierbaren Flüssigkeit dadurch, dass die Temperierungseinheit eine temperierbare Homogenisierungseinheit zur Homogenisierung und zur Temperatureinstellung der polymerisierbaren Flüssigkeit ist. Die Verarbeitungsparameter der Flüssigkeit können daher individuell an die Flüssigkeitseigenschaften angepasst werden. Insbesondere kann die Viskosität der Flüssigkeit auf einen Wert eingestellt werden, bei welchem sie sich besonders gut zu Schichten polymerisieren lässt. Auch können Flüssigkeiten mit Füllstoffen und/oder hohen Viskositäten verarbeitet werden, da sich die Füllstoffe durch den Homogenisator gleichmässig in der Flüssigkeit verteilen lassen. Es lassen sich auch Funktionsmaterialien verarbeiten, welche bei Vorrichtungen des Stands der Technik nicht oder nur sehr schwer verarbeitbar sind. So ist es denkbar auch Flüssigkeiten zu verarbeiten, welche keramische, metallische oder mineralische Füllstoffe aufweisen.

Die Fertigungsvorrichtung kann wenigstens zwei mit unterschiedlichen Flüssigkeiten gefüllte Wannen umfassen, wobei die Wanne, welche mit einer ersten Flüssigkeit gefüllt ist, gegen eine weitere Wanne austauschbar ist, welche mit einer zweiten Flüssigkeit gefüllt ist. Die Wanne lässt sich rasch und sauber gegen eine andere Wanne mit einer anderen Flüssigkeit tauschen, da sich in der Wanne lediglich die Flüssigkeit befindet. Der Flüssigkeitstausch kann daher nicht durch mühsames Entleeren, Säubern und Neubefüllen der Wanne bzw. des Behälters erfolgen, sondern durch einfaches Austauschen zweier Behälter. Der rückgestellte Behälter bzw. die Wanne sind verschliessbar und daher nach Bedarf lagerbar. So kann eine breite Produktpalette an polymerisierbaren Flüssigkeiten mit oder ohne Füllstoffe abrufbar sein. Jeder Behälter kann mit einem eigenen Rührfisch versehen sein, damit sich die Entnahme und die Reinigung des Rührfisches erübrigt. Durch die Möglichkeit die Position der Wanne relativ zu dem Aufbauelement zu verändern, ist die Vorrichtung äusserst flexibel und kann an die unterschiedlichsten polymerisierbaren bzw. vernetzbaren Flüssigkeiten und die unterschiedlichsten herzustellenden dreidimensionalen Objekte angepasst werden. Das Aufbauelement lässt sich während des Druckprozesses oberhalb der Wanne bzw. der Flüssigkeit, auf dem Flüssigkeitsspiegel oder in der Flüssigkeit anordnen.

In einer besonders bevorzugten Ausführungsform der Erfindung sind die Trägerplattform und das Aufbauelement an einem gemeinsamen Support gehalten, welcher Support in die Wanne ein- und ausfahrbar ist. Durch Hochfahren des Supports werden gleichzeitig alle Einbauten aus der Wanne entfernt. Die Wanne kann einfach aus ihrer Halterung, mitsamt der sich darin befindenden polymerisierbaren Flüssigkeit entnommen werden. Das einzelne zeitintensive Ausbauen von Einbauten aus der Wanne kann entfallen. Genauso einfach lässt sich eine weitere Wanne mit einer anderen Flüssigkeit in die dafür vorgesehene Halterung stellen. Zum Start des additiven Aufbaus eines Objekts muss lediglich der Support in die Wanne eingefahren werden. Das Einfahren des Supports hat auch den Vorteil, dass dadurch die Flüssigkeit durchmischt wird und eine zusätzliche Homogenisierung der Flüssigkeit nicht zwangsläufig vorhanden sein muss.

In einer weiteren bevorzugten Ausführungsform der Erfindung ist die Trägerplattform zumindest in vertikaler Richtung verschiebbar an dem Support gehalten, wodurch der Abstand zwischen der Trägerplattform und dem Aufbauelement veränderbar ist. Der Support beinhaltet daher auch die lineare Bewegungsvorrichtung, welche zum Aufbau eines Objektes in Schichten notwendig ist. Der Support bildet mit der Trägerplattform und dem Aufbauelement eine Einheit, welche mit einer einzigen vertikalen Bewegung aus der Wanne einfahr- und ausfahrbar ist.

Als vorteilhaft hat es sich erwiesen, wenn die Strahlenquelle zumindest in vertikaler Richtung verschiebbar an dem Support gehalten ist. Die Verschiebbarkeit der Strahlenquelle relativ zu dem Aufbauelement bewirkt, dass sich die Auflösung des Bildes, welches als Vorlage zur Bildung einer Objektschicht dient, rasch einstellen und anpassen lässt.

Als zweckdienlich hat es sich erwiesen, wenn die Homogenisierungseinheit ein Magnetrührer ist. Magnetrührer zählen zu weit verbreiten Produkten im Laborbedarf und sind dementsprechend kostengünstig und ausgereift. Der Magnetrührer umfasst eine beheizbare oder kühlbare Platte und einen sogenannten Rührfisch. Der Rührfisch wird in die Flüssigkeit eingelegt und wird durch magnetische Kraft rotiert. Die Wanne wird auf die Platte gestellt und kann für einen Produktwechsel jederzeit entnommen werden. Denkbar sind als Homogenisator auch eine Ultraschalleinwirkung auf die Flüssigkeit, direkt mechanisch bewegte Rührer oder eine Bewegung des Behälters.

Die Erfindung zeichnet sich bevorzugt dadurch aus, dass die Wanne in der Höhe verschiebbar ist. Dadurch können drei Produktionsmodi realisiert werden. Einerseits kann das Aufbauelement durch die Position der Wanne oberhalb des Flüssigkeitsspiegels angeordnet werden. Dann erfolgt der Schichtaufbau ausserhalb der Flüssigkeit. Andererseits kann die Wanne auch derart positioniert sein, dass das Aufbauelement auf dem Flüssigkeitsspiegel zu liegen kommt. Dann erfolgt der Schichtaufbau innerhalb der Flüssigkeit. Auch kann die Wanne derart positioniert werden, dass das Aufbauelement innerhalb der Flüssigkeit zu liegen kommt. Der Produktionsmodus kann daher an die unterschiedlichsten Eigenschaften der polymerisierbaren Flüssigkeit angepasst werden.

Auch ist die Wanne durch Ihre Verschiebbarkeit besonders einfach aus der Vorrichtung zu entnehmen.

Zweckmässigerweise ist das Aufbauelement ausserhalb oder innerhalb der Wanne anordenbar. Am zweckmässigsten werden diese Anordnungen durch die vertikale Verschiebbarkeit der Wanne erreicht. Denkbar wäre es auch, dass das Aufbauelement vertikal verschiebbar ist. So lassen sich die weiter oben beschriebenen Produktionsmodi umsetzen.

In einer weiteren bevorzugten Ausführungsform umfasst das Aufbauelement eine Trennmembran. Die Trennmembran ist bevorzugt aus einem Antihaftmaterial aufgebaut, von welchem sich die ausgehärteten auspolymerisierten Objektschichten leicht lösen.

Besonders bevorzugt ist es, wenn die Trennmembrane aus Perfluorethylenpropylen (FEP) besteht, da dieses Material bei vielen UV-aushärtbaren Harzen antihaftend wirkt.

Zweckmässigerweise ist die Trennmembrane gaspermeabel, um an der ersten Seite des Aufbauelements Hemmmaterialien bereitzustellen. Solche Hemmmaterialien ermöglichen die gezielte Polymerisierung der Flüssigkeit, wenn sie aus dieser entweichen.

Als vorteilhaft erweist es sich, wenn das Aufbauelement eine Trägerplatte umfasst. Die Trägerplatte dient der Stabilisierung des Aufbauelements, damit dieses separat und eigenstabil in der Vorrichtung anordenbar ist. Die Trennmembran kann an der Trägerplatte aufgespannt werden. Bevorzugt ist die Trägerplatte aus einem transparenten Material, beispielsweise einem Glas oder einem Kunststoff.

Zweckmässigerweise kann die Antihaftbeschichtung als eine Dünnfilmbeschichtung realisiert sein. Aus der Dünnschichttechnologie ist eine grosse Anzahl von Materialien mit guten antihaftenden Eigenschaften bekannt.

In einer weiteren bevorzugten Ausführungsform ist das Aufbauelement in Vibration versetzbar. Die Vibration führt dazu, dass sich die polymerisierten Objektschichten leichter von dem Aufbauelement lösen. Auch ist die Vibration nützlich, wenn sich an dem Aufbauelement anhaftende Gasblasen lösen sollen.

Als vorteilhaft erweist es sich, wenn der Anstellwinkel des Aufbauelements relativ zur Wanne verstellbar ist. Wird das Objekt an die erste Seite des Aufbauelements gefahren, so ist es von Vorteil, wenn diese schräg gestellt ist, um Gasblasen von der ersten Seite zu verdrängen. Während des Aufbaus einer weiteren Objektschicht ist das Aufbauelement wieder horizontal zu stellen.

Ein weiterer Aspekt der Erfindung betrifft ein Verfahren zur schichtweisen Herstellung von dreidimensionalen Objekten aus einer polymerisierbaren Flüssigkeit gemäss Oberbegriff des Anspruchs 9. Erfindungsgemäss wird zur Einstellung der optimalen Prozessparameter der polymerisierbaren Flüssigkeit die Flüssigkeit in der Wanne homogenisiert und auf eine Prozesstemperatur eingestellt und die Bauraumtemperatur geregelt. Als Bauraum ist der Raum zu verstehen, welcher von einem Gehäuse begrenzt wird und in welchem die Bauelemente der Vorrichtung mit Ausnahme der Lichtquelle angeordnet sind. Die Einstellung der Prozessparameter kann durch einen Homogenisator, insbesondere einen Magnetrührer, erfolgen. Der Rührfisch des Magnetrührers kann am Boden der Wanne rühren, da das Objekt oberhalb der Trägerplattform auf dieser aufgebaut wird und deshalb nicht im Weg ist. Auch kann die Temperatur durch eine Manschette eingestellt werden, welche beheizt oder gekühlt werden kann und die Wanne umschliesst. Die Verwendung und Auswahl der polymerisierbaren Flüssigkeiten sind daher nicht auf einphasige Harze beschränkt. Es können auch jegliche mehrphasige Funktionsmaterialien mit Füllstoffen oder Harze mit hohen Viskositäten verarbeitet werden.

Die Wanne kann bevorzugt unterhalb des Aufbauelements angeordnet werden und die Trägerplattform wird während des schichtenweisen Aufbaus des Objektes in Richtung des Bodens der Wanne bewegt. Diese Anordnung ermöglicht es, das Objekt mit einer hohen Genauigkeit und Masshaltigkeit herzustellen, ein sauberes Handling der polymerisierbaren Flüssigkeit und die Verwendung vieler unterschiedlicher Funktionsmaterialien zum Aufbau des Objekts.

Als besonders vorteilhaft erweist es sich, wenn zum Wechsel der polymerisierbaren Flüssigkeit die Wanne gegen eine weitere Wanne mit einer anderen polymerisierbaren Flüssigkeit getauscht wird. Die Wanne bzw. der Behälter muss nicht entleert, gereinigt und mit einer anderen Flüssigkeit befüllt werden, sondern wird einfach verschlossen zur Seite gestellt. Der Produktionswechsel kann daher sehr rasch und einfach erfolgen.

Für ein grosses Produktportfolio kann eine Vielzahl von mit polymerisierbaren Flüssigkeiten gefüllten Behältern oder Wannen auf Lager gestellt sein. Selbstverständlich können die Grösse der Behälter und die Füllvolumen nach Bedarf variieren.

In einer weiteren bevorzugten Ausführungsform wird zum Wechsel der Wanne gegen eine weitere Wanne ein Support, an welchem die Trägerplattform und das Aufbauelement gehalten sind, aus der Wanne ausgefahren und in die weitere Wanne eingefahren. Dadurch bewirkt eine einzige translatorische Bewegung des Supports, dass die Wanne aus ihrer Halterung entnehmbar ist, ohne dass weitere Einbauten aus dieser entfernt werden müssten.

Die Erfindung zeichnet sich bevorzugt auch dadurch aus, dass die Höhe der Wanne zu dem Aufbauelement während der Objektherstellung derart eingestellt wird, dass das Aufbauelement oberhalb des sich in der Wanne bildenden Flüssigkeitsspiegels, auf dem Flüssigkeitsspiegel oder in der Flüssigkeit positioniert wird. Es stehen, wie bereits weiter oben ausgeführt, daher drei Produktionsmodi zur Auswahl. Die Objektschichten können durch die vertikale Bewegbarkeit der Wanne ausserhalb oder innerhalb der polymerisierbaren Flüssigkeit aufgebaut werden. Dies führt zu einer zusätzlichen Flexibilität, um das Druckverfahren optimal an die einzusetzenden Flüssigkeiten anpassen zu können.

Zweckmässigerweise wird auf der ersten Seite des Aufbauelements ein Unterdruck oder eine Schutzgasatmosphäre aufgebaut. Unerwünschte Gasblasen an dem Aufbauelement können so wirksam verdrängt bzw. aufgelöst werden. Dadurch steht während des Produktionsverfahrens immer ein sauberes Aufbauelement zur Verfügung.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: eine Prinzipdarstellung des Top-down Druckverfahrens;
- Figur 2:: eine Prinzipdarstellung des Bottom-Up-Druckverfahrens;
- Figur 3:: eine Prinzipdarstellung des neuen Druckverfahrens und
- Figur 4-6:: unterschiedliche Ausführungsformen eines Aufbauelements.

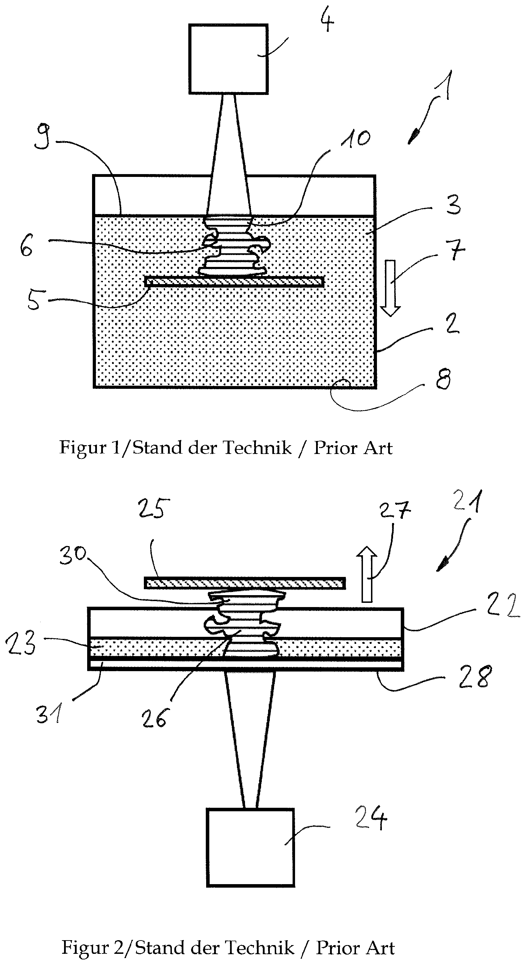

In den Figuren 1 und 2 sind zwei additive Fertigungsvorrichtungen zur schichtweisen Herstellung von dreidimensionalen Objekten, wie sie aus dem Stand der Technik bekannt sind, gezeigt. Die Vorrichtung gemäss der Figur 1 ist mit dem Bezugszeichen 1 bezeichnet wohingegen die Vorrichtung gemäss der Figur 2 mit dem Bezugszeichen 21 bezeichnet ist.

Das in Figur 1 gezeigte Verfahren wird als Top-Down-Druckverfahren bezeichnet. Die Vorrichtung 1 zur Umsetzung dieses Verfahrens umfasst eine Wanne 2, in welcher eine polymerisierbare Flüssigkeit 3 aufgegeben ist. Bevorzugt handelt es sich bei der Flüssigkeit um ein Harz, welches unter UV-Bestrahlung aushärtbar ist. Als Strahlenquelle ist eine Belichtungsquelle 4 vorgesehen, bei welcher es sich zumeist um einen DLP-Beamer handelt. Auf einer Trägerplattform 5, welche innerhalb der Flüssigkeit 3 angeordnet ist, wird das dreidimensionale Objekt 6 schichtweise aufgebaut. Die Trägerplattform 5 wird in Richtung 7 des Bodens 8 bewegt. Dabei kann die Flüssigkeit 3 zwischen dem Objekt 6 und der Oberfläche 9 der Flüssigkeit als eine Schicht 10 nachfliessen. Die nachgeflossene Schicht 10 härtet gemäss der Lichtfläche, welche auf die Oberfläche 9 fällt, unter dem Strahleneinfluss aus. Das fertige Objekt 6 kann aus der Flüssigkeit 3 entnommen werden. Da die Schichten 10 an der Oberfläche 9 ausgehärtet werden, existiert keine definierte Aufbauschicht. Dadurch sind der Genauigkeit, mit welchem das Objekt 6 aufgebaut wird, Grenzen gesetzt.

Das in Figur 2 gezeigte Verfahren wird als Bottom-Up-Druckverfahren bezeichnet. Das Verfahren wird mit einer Vorrichtung umgesetzt, welche gesamthaft mit dem Bezugszeichen 21 bezeichnet ist. Die Belichtungsquelle 24 strahlt von unten auf den Boden 28 der Wanne 22. Am Boden 28 ist ein Aufbauelement 31 angeordnet, an welchem die Schichten 30 des Objektes 26 aufgebaut werden. Das Objekt 26 wird zwischen dem Aufbauelement 31 und einer Trägerplattform 25 schichtenweise aufgebaut. Ist eine Schicht 30 ausgehärtet bzw. polymerisiert, so wird die Trägerplattform in Richtung 27 nach oben verschoben. Zwischen dem Aufbauelement 31 und dem Objekt 26 wird Platz frei gegeben, in welchen die polymerisierbare Flüssigkeit 23 nachfliessen kann. Die an dem Aufbauelement 31 ausgehärtete Schicht 30 muss von dem Aufbauelement 31 abgehoben werden. Dadurch wird das Aufbauelement 31 abgenutzt und ist als ein Verschleissteil zu erachten, welches in bestimmten Zeitintervallen erneuert werden muss.

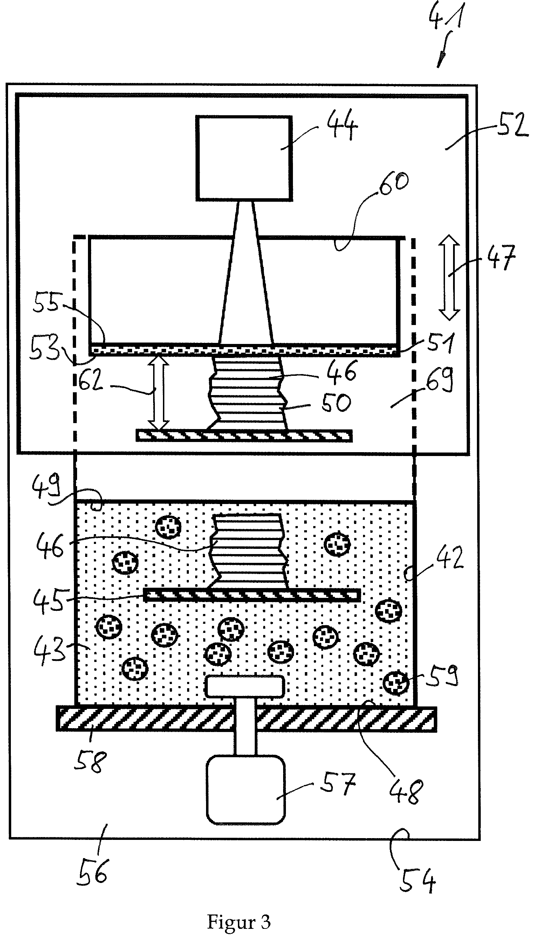

Die in Figur 3 gezeigte additive Fertigungsvorrichtung ist gesamthaft mit dem Bezugszeichen 41 bezeichnet. Grundsätzlich weist die Vorrichtung ähnliche Bauelemente wie der weiter oben beschriebene Stand der Technik auf. Die neue Kombination und Anordnung der Bauelemente führt jedoch in überraschender Weise zu einer Vielzahl von Vorteilen.

In einer Wanne 42 bzw. dem Behälter 42 ist eine polymerisierbare Flüssigkeit 43 aufgegeben. In der Wanne 42 ist eine Trägerplattform 45 in vertikaler Richtung verschiebbar angeordnet. Dies ist durch den Richtungspfeil 47 verdeutlicht. Auf der Trägerplattform 45 wird das Objekt 46 schichtweise aufgebaut. Wie in Figur 3 gezeigt, kann die Trägerplattform 45 auch aus der Wanne 42 herausgefahren werden. Im Gegensatz zum Stand der Technik ist das Aufbauelement 51 oberhalb der Trägerplattform 45 angeordnet und nicht am Boden 48 der Wanne. Das Aufbauelement 51 weist eine erste und zweite Seite 53,55 auf. Die Flüssigkeit 43 wird an der ersten Seite 53 zu einer Schicht 50 des Objekts polymerisiert. Auf die zweite Seite 55 fällt das Licht einer Lichtquelle 44, welche das Aufbauelement 51 durchdringt und die Aushärtung der Flüssigkeit 43 direkt an der ersten Seite 53 bewirkt. Bevorzugt ist die Lichtquelle 44 ein DLP-Beamer, da es sich dabei um ein kostengünstiges Massenprodukt handelt, welches alle Anforderungen der Vorrichtung 41 erfüllt. Die Elemente der Vorrichtung 41 sind bevorzugt an einem Support 52 angeordnet, welcher von einem Gehäuse 54 begrenzt ist und im nächsten Absatz genauer beschrieben wird.

Die Trägerplattform 45 und das Aufbauelement 51 sind bevorzugt an einem gemeinsamen Support 52 gehalten. Der Support 52 ist schematisch in Figur 3 mit einem Rechteck dargestellt. Der Support 52 kann beispielsweise ein aus Profilen aufgebautes Gerüst sein, an welchem neben der Trägerplattform 45 und dem Aufbauelement 51 noch weitere Elemente der Fertigungsvorrichtung 41, beispielsweise der DLP-Beamer 44, angeordnet sein können. Der Support 52 ist mitsamt der Trägerplattform 45 und dem Aufbauelement 51 relativ zu der Wanne 42 entlang des Pfeils 47 verschiebbar. Der Support 52 ist in die Wanne 42 einfahrbar und aus dieser vollständig ausfahrbar. Ist der Support 52 aus der Wanne 42 ausgefahren, so ist die Wanne 42 frei von Einbauten und kann rasch gegen eine weitere Wanne mit einer zweiten Flüssigkeit getauscht werden. Damit die Wanne 42 gegen eine weitere Wanne austauschbar ist, ist daher lediglich der Support 52 in Richtung des Pfeils 47 hochzufahren bzw. aus der Wanne 42 auszufahren. Ist die weitere Wanne in der dafür vorgesehenen Halterung platziert, so ist die Vorrichtung sehr rasch wieder betriebsbereit, sobald der Support 52 in die weitere Wanne eingefahren ist.

Die Trägerplattform 45 ist verschiebbar an dem Support 52 gehalten. Dadurch lässt sich der Abstand zwischen der Trägerplattform 45 und dem Aufbauelement 51 verändern. Das dreidimensionale Objekt 46 kann zwischen der Trägerplattform 45 und dem Aufbauelement 51 additiv aufgebaut werden, indem die Trägerplattform 45 sukzessive nach unten verschoben wird. Dies ist durch einen ersten Verschiebepfeil 62 in Figur 3 verdeutlicht. Nach Fertigstellung des Objekts 46 wird die Trägerplattform 47 an dem Support 52 in Richtung des Aufbauelements 51 verschoben, damit ein weiteres Objekt additiv in Schichten aufgebaut werden kann. Da die Trägerplattform 45 an dem Support 52 verschiebbar angeordnet ist, welcher seinerseits verschiebbar ist, lässt sich die Wanne 42 durch Verschieben des Supports 52 von allen Einbauten befreien.

Auch der DLP-Beamer 44 ist bevorzugt in vertikaler Richtung verschiebbar an dem Support 52 angeordnet. Dies ist durch einen zweiten Verschiebepfeil 72 verdeutlicht. Die Verschiebbarkeit des DLP-Beamers 44 ermöglicht die Auflösung des auf das Aufbauelement 51 projizierten Bildes rasch ändern und einstellen zu können.

Da der Boden 48 frei von dem Aufbauelement 51 ist und das Aufbauelement 51 separat von der Wanne 42 in der Vorrichtung angeordnet ist, kann der am Boden 48 frei gewordene Platz zur Anordnung eines Magnetrührers 57 genutzt werden. In der Vorrichtung 41 können daher auch polymerisierbare Flüssigkeiten 43 verarbeitet werden, welche homogenisiert werden müssen. Es können Funktionsmaterialien eingesetzt werden, welche Füllstoffe 59 enthalten. Auch können Harze mit hohen Viskositäten eingesetzt werden. Der Magnetrührer 57 umfasst eine Platte 58, welche geheizt oder gekühlt werden kann und auf welcher die Wanne 42 abstellbar ist. Zur Temperierung des Prozesses ist auch eine die Wanne 42 umgebende Manschette denkbar, welche gekühlt oder beheizt werden kann. Zusätzlich kann die Temperatur des Aufbauraums 56 noch einstellbar sein. Durch die Möglichkeit, die Prozesstemperatur genau auf die zu verarbeitende polymerisierbare Flüssigkeit 43 einzustellen, lassen sich eine Vielzahl von Flüssigkeiten 43 vollständig homogenisieren und auf die optimale Verarbeitungstemperatur einstellen. Oberhalb des Aufbauelements 51 kann ein die zweite Seite 55 umschliessendes Haltegehäuse 60 vorgesehen sein, welches gegenüber dem Aufbauraum 56 geschlossen ist und eine verstellbare Optik zur Optimierung des Aufbauprozesses beinhaltet.

Es ist nicht nur die Trägerplattform 45 sondern auch die Wanne 42 entlang des Pfeils 47 nach oben und unten verschiebbar. Dadurch kann das Aufbauelement 51 während des Druckens des Objektes 46 oberhalb der Flüssigkeitsoberfläche 49 bzw. des Flüssigkeitsspiegels angeordnet sein. Zum Schichtaufbau wird das mit Flüssigkeit 43 benetzte Objekt 46 aus der Flüssigkeit mit Hilfe der Trägerplattform 45 gehoben und an das Aufbauelement 51 zur Aushärtung einer Schicht 50 geführt. Für eine weitere Schicht 50 muss das Objekt wieder in das Flüssigkeitsreservoir der Wanne 42 getaucht werden.

Wenn es für den Objektdruck erforderlich ist, kann das Aufbauelement 51 jedoch auch auf der Oberfläche 49 oder in der Flüssigkeit 43 angeordnet werden. Dann erfolgt der Schichtaufbau in der Flüssigkeit 43 und weitere Flüssigkeit zum Schichtaufbau kann direkt aus der Wanne 42 nachfliessen.

Ein weiterer Vorteil, dass das Aufbauelement 51 von der Wanne 42 separiert ist, liegt darin, dass die Wanne 42 aus der Vorrichtung 41 mitsamt der Flüssigkeit 43 und dem Rührer entnommen werden kann und eine andere Wanne bzw. Gefäss mit einer anderen Flüssigkeit und einem Rührer in die Vorrichtung 41 gestellt werden kann. Ein Produktwechsel lässt sich daher in kurzer Zeit durchführen. Die beigestellte Wanne 42 ist bevorzugt mit einem Deckel verschliessbar.

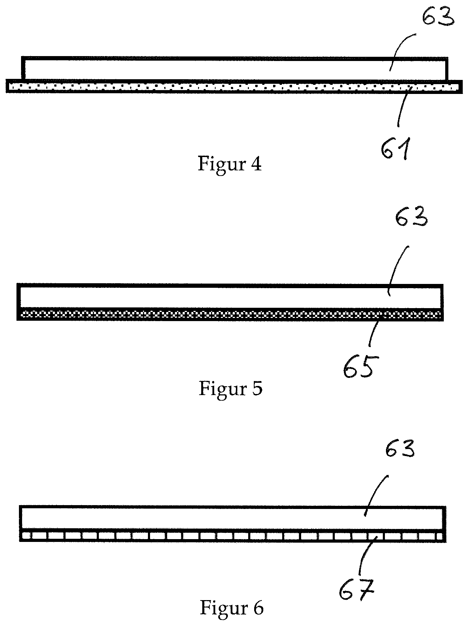

Das Aufbauelement 51 kann aus einer Trennmembran 61 aufgebaut sein (Figur 4). Um die gedruckten Schichten 50 besonders schonend und leicht von der Trennmembran ablösen zu können, besteht die Trennmembran 61 aus einem antihaftenden Material. Besonders geeignet sind beispielsweise Perfluorethylenpropylene. In Abhängigkeit von der auszuhärtenden Flüssigkeit kann das Material der antihaftenden Trennmembran angepasst werden. Da das Aufbauelement 51 von der Wanne 42 separiert ist, lässt sich das Aufbauelement 51 auch rasch gegen ein anderes Aufbauelement tauschen. Das Aufbauelement 51 kann neben der Trennmembran 61 auch eine Trägerplatte 63, beispielsweise aus Glas, umfassen (Figur 4). Dadurch werden die statischen Eigenschaften des Aufbauelements 51 verbessert. Auch ist die Trennmembran 61 einfach an der Trägerplatte 63 zu befestigen bzw. aufzuspannen oder auszutauschen.

Für gute Antihafteigenschaften kann die Trägerplatte 63 auch mit einem Dünnfilm 65 beschichtet sein (Figur 5). Ein Dünnfilm besitzt typischerweise eine Schichtdicke von weniger als 10 µm. Das Aufbauelement 51 kann auch vibrierend ausgeführt sein, um das Lösen der Objektschicht 50 zu verbessern und anhaftende Luftblasen abzulösen. Macht es die verwendete polymerisierbare Flüssigkeit notwendig, dass ein Hemmgas beim Schichtaufbau vorhanden ist, so kann eine permeable Membran 67 an dem Aufbauelement 51 vorgesehen sein (Figur 6).

Um an dem Aufbauelement 51 oder an der obersten Schicht des Objektes 46 anhaftende Luftblasen zu entfernen, lässt sich das Aufbauelement 51 relativ zur Wanne 42 schräg stellen, wenn das Objekt 46 an das Aufbauelement 51 herangeführt wird. Um die unerwünschten Blasen zu entfernen, lässt sich die erste Seite 53 des Aufbauelements 51 auch unter Unterdruck versetzen oder kann mit einem Schutzgas beaufschlagt werden. Der Bereich in welchem bevorzugt ein Unterdruck aufgebaut werden kann, ist durch den gestrichelten Bereich 69, welcher als Unterdruckbereich bezeichnet werden kann, gezeigt. Dieser Bereich ist gegenüber dem restlichen Volumen innerhalb des Gehäuses abdichtbar. Der Unterdruckbereich wird bevorzugt durch Einfahren des Supports 52 in die Wanne 42 abgedichtet. Dadurch, dass der Unterdruckbereich 69 ein reduziertes Volumen im Vergleich zum Volumen des Gehäuses 54 aufweist, ist der Unterdruck rasch herstellbar. Der Unterdruckbereich schliesst bevorzugt die Trägerplattform 45 und das Aufbauelement 51 und insbesondere die erste Seite 53 des Aufbauelements 51 ein. An der ersten Seite 53 des Aufbauelements 51 ist dadurch ein Unterdruck oder eine Schutzgasatmosphäre aufbaubar.

### Legende:

- 1: Top-Down-Druckvorrichtung
- 2: Wanne
- 3: Polymerisierbare Flüssigkeit
- 4: Belichtungsquelle
- 5: Trägerplattform
- 6: Dreidimensionales Objekt
- 7: Richtungspfeil
- 8: Boden der Wanne
- 9: Oberfläche der Flüssigkeit
- 10: Schicht des Objekts
- 21: Bottom-Up-Druckvorrichtung
- 22: Wanne
- 23: Polymerisierbare Flüssigkeit
- 24: Lichtquelle
- 25: Trägerplattform
- 26: Dreidimensionales Objekt
- 27: Richtungspfeil
- 28: Boden der Wanne
- 30: Schicht des Objekts
- 31: Aufbauelement
- 41: Additive Fertigungsvorrichtung
- 42: Wanne, Behälter
- 43: Polymerisierbare Flüssigkeit
- 44: Lichtquelle
- 45: Trägerplattform
- 46: Dreidimensionales Objekt
- 47: Richtungspfeil
- 48: Boden der Wanne
- 49: Flüssigkeitsoberfläche
- 50: Schicht des Objekts
- 51: Aufbauelement
- 52: Support
- 53: Erste Seite des Aufbauelements
- 54: Gehäuse
- 55: Zweite Seite des Aufbauelements
- 56: Aufbauraum
- 57: Magnetrührer
- 58: Platte
- 59: Füllstoffe
- 60: Aufbaugehäuse
- 61: Trennmembran
- 62: Erster Verschiebepfeil
- 63: Trägerplatte
- 65: Dünnfilm
- 67: Permeable Membran
- 69: Unterdruckbereich
- 72: Zweiter Verschiebepfeil

## Patentansprüche

1. Additive Fertigungsvorrichtung (21,41) zur schichtweisen Herstellung von dreidimensionalen Objekten (26,46) aus einer polymerisierbaren Flüssigkeit (23,43) umfassend
- eine Wanne (22,42) mit einem Boden (28,48) zur Aufnahme der Flüssigkeit (23,43),
- eine Trägerplattform (25,45) auf welcher das Objekt (26,46) aufgebaut wird und welche relativ zu der Wanne (22,42) in der Höhe verschiebbar ist,
- ein Aufbauelement (31,51) mit einer ersten und zweiten Seite (53,55), an welcher die Flüssigkeit (23,43) an der ersten Seite (53) zu einer Objektschicht (30,50) polymerisiert und
- eine Strahlenquelle (24,44), welche die zweite Seite (55) des strahlendurchlässigen Aufbauelements (31,51) bestrahlt, wobei das Aufbauelement (51) oberhalb der Trägerplattform (45) angeordnet ist und der Abstand zwischen dem Aufbauelement (51) und der Wanne (42) relativ zueinander veränderbar ist,
**dadurch gekennzeichnet,**
- **dass** an der Unterseite des Bodens (48) eine Temperierungseinheit (57) zur Temperatureinstellung der polymerisierbaren Flüssigkeit (43) angeordnet ist und
- **dass** die Temperierungseinheit eine temperierbare Homogenisierungseinheit (57) zur Homogenisierung und zur Temperatureinstellung der polymerisierbaren Flüssigkeit (43) ist.

2. Vorrichtung nach Anspruch 1, **dadurch gekennzeichnet, dass** die Homogenisierungseinheit ein Magnetrührer (57) ist.

3. Vorrichtung nach einem der vorangehenden Ansprüche, **dadurch gekennzeichnet, dass** das Aufbauelement (51) eine Trennmembran (61) umfasst.

4. Vorrichtung nach Anspruch 3, **dadurch gekennzeichnet, dass** die Trennmembrane (61) aus Perfluorethylenpropylen (FEP) besteht.

5. Vorrichtung nach Anspruch 3, **dadurch gekennzeichnet, dass** die Trennmembrane (61) gaspermeabel ist.

6. Vorrichtung nach einem der vorangehenden Ansprüche, **dadurch gekennzeichnet, dass** das Aufbauelement (51) eine Trägerplatte (63) umfasst.

7. Vorrichtung nach Anspruch 6, **dadurch gekennzeichnet, dass** die Trägerplatte (63) eine Dünnfilmbeschichtung (65) aufweist.

8. Verfahren zur schichtweisen Herstellung von dreidimensionalen Objekten aus einer polymerisierbaren Flüssigkeit bei welchem
- zwischen einer Trägerplattform (25,45) und einem Aufbauelement (31,51) mit einer ersten und zweiten Seite (53,55) die polymerisierbare Flüssigkeit (23,43) in Schichten (30,50) polymerisiert und ausgehärtet wird und
- die Trägerplattform (25,45) während des Objektaufbaus von dem Aufbauelement (31,51) weg bewegt wird,
- die polymerisierbare Flüssigkeit (23,43) in einer Wanne (22,42) bereitgestellt wird,
- das Aufbauelement (31,51) auf der von der Trägerplattform (25,45) abgewandten zweiten Seite (55) mit einer Strahlenquelle (24,44) bestrahlt wird, um die Objektschichten (30,50) zu polymerisieren und
- die Wanne (42) unterhalb des Aufbauelements (51) angeordnet wird und die Trägerplattform (45) während des schichtenweisen Aufbaus des Objektes (46) in Richtung des Bodens (48) der Wanne (42) bewegt wird.
**dadurch gekennzeichnet,**
**dass** zur Einstellung der optimalen Prozessparameter und zur Homogenisierung der polymerisierbaren Flüssigkeit (43) die Flüssigkeit in der Wanne (42) durch eine an der Unterseite des Bodens (48) angeordnete temperierbare Homogenisierungseinheit (57) homogenisiert wird und auf eine Prozesstemperatur eingestellt wird und die Bauraumtemperatur geregelt wird.

9. Verfahren nach Anspruch 8, **dadurch gekennzeichnet, dass** die Höhe der Wanne (42) zu dem Aufbauelement (51) während der Objektherstellung derart eingestellt wird, dass das Aufbauelement (51) oberhalb des sich in der Wanne (42) bildenden Flüssigkeitsspiegels (49), auf dem Flüssigkeitsspiegel (49) oder in der Flüssigkeit (43) positioniert wird.

10. Verfahren nach einem der Ansprüche 8 oder 9, **dadurch gekennzeichnet, dass** auf der ersten Seite (53) des Aufbauelements (51) ein Unterdruck oder eine Schutzgasatmosphäre aufgebaut wird.

## Claims

1. Additive manufacturing device (21, 41) for the layered production of three-dimensional objects (26, 46) from a polymerizable liquid (23, 43) comprising:
- a trough (22,42) with a bottom (28, 48) for receiving the liquid (23, 43),
- a carrier platform (25, 45) on which the object (26, 46) is built up and which is displaceable in height in relation to the trough (22, 42),
- a structural element (31, 51) with a first and a second side (53, 55) on which the liquid (23, 43) polymerizes on the first side (53) to form an object layer (30, 50) and
- a radiation source (24, 44) which irradiates the second side (55) of the radiation transmissive structural element (31, 51), wherein the structural element (51) is arranged above the carrier platform (45) and the distance between the structural element (51) and the trough (42) in relation to one another can be varied,
**characterized in**
- **that** a temperature control unit (57) for the temperature adjustment of the polymerizable liquid (43) is placed on the lower side of the bottom (48) and
- **that** the temperature control unit is a temperable homogenization unit (57) for the homogenization and for the temperature adjustment of the polymerizable liquid (43).

2. Device according to claim 1, **characterized in that** the homogenization unit (57) is a magnetic stirrer (57).

3. Device according to one of the preceding claims, **characterized in that** the structural element (51) comprises a separating membrane (61).

4. Device according to claim 3, **characterized in that** the separating membrane (61) is made of fluorinated ethylene propylene (FEP).

5. Device according to claim 3, **characterized in that** the separating membrane (61) is permeable to gas.

6. Device according to one of the preceding claims, **characterized in that** the structural element (51) comprises a carrier platform (63).

7. Device according to claim 6, **characterized in that** the carrier plate (63) has a thin film coating (65).

8. Method for the layered production of three-dimensional objects from a polymerizable liquid in which
- the polymerizable liquid (23, 43) is polymerized and cured in layers (30, 50) between a carrier platform (25, 45) and a structural element (31, 51) with a first and a second side (53, 55) and
- the carrier platform (25, 45) is moved away from the structural element (31, 51) during the object buildup,
- the polymerizable liquid (23, 43) is provided in a trough (22, 42),
- the structural element (31, 51) is irradiated on the second side (55) facing away from the carrier platform (25, 45) with a radiation source (24, 44) in order to polymerize the object layers (30, 50) and
- the trough (42) is placed below the structural element (51) and the carrier platform (45) is moved in direction of the bottom (48) of the trough (42) during the layered buildup of the object (46),
**characterized in**
**that**, for the adjusting of the optimal process parameters and for the homogenization of the polymerizable liquid (43), the liquid in the trough (42) is homogenized by a temperable homogenization unit (57) placed on the lower side of the bottom (48) and adjusted to a process temperature and the installation space temperature is adjusted.

9. Method according to claim 8, **characterized in that** the height of the trough (42) to the structural element (51) is adjusted during the object production in such a way that the structural element (51) is positioned above the liquid level (49) constituting in the trough (42), at the liquid level (49) or in the liquid (43).

10. Method according to one of the claims 8 or 9, **characterized in that** a negative pressure or an inert atmosphere is built up on the first side (53) of the structural element (51).

## Revendications

1. Dispositif de fabrication additive (21, 41) pour la fabrication par couches d'objets tridimensionnels (26, 46) à partir d'un liquide polymérisable (23, 43) qui comprend :
- un bac (22, 42) avec un fond (28, 48) pour recevoir le liquide (23, 43),
- une plateforme de support (25, 45) sur laquelle l'objet (26, 46) est monté et qui est déplaçable en hauteur par rapport au bac (22, 42),
- un élément structurel (31, 51) avec un premier et un second côté (53, 55) sur lequel le liquide (23, 43) est polymérisé sur le premier côté (53) en une couche d'objet (30, 50) et
- une source de rayons (24, 44) qui irradie le second côté (55) de l'élément structurel (31, 51) perméable aux rayons, cependant que l'élément structurel (51) est placé au-dessus de la plateforme de support (45) et la distance entre l'élément structurel (51) et le bac (42) l'un par rapport à l'autre est variable, **caractérisé en ce**
- **qu'**une unité de régulation de la température (57) pour le réglage de la température du liquide polymérisable (43) est placée sur la face inférieure du fond (48) et
- **que** l'unité de régulation de la température est une unité d'homogénéisation pouvant être tempérée (57) pour l'homogénéisation et pour le réglage de la température du liquide polymérisable (43).

2. Dispositif selon la revendication 1, **caractérisé en ce que** l'unité d'homogénéisation est un agitateur magnétique (57).

3. Dispositif selon l'une des revendications précédentes, **caractérisé en ce que** l'élément structurel (51) comprend une membrane de séparation (61).

4. Dispositif selon la revendication 3, **caractérisé en ce que** la membrane de séparation (61) est en perfluoréthylène propylène (FEP).

5. Dispositif selon la revendication 3, **caractérisé en ce que** la membrane de séparation (61) est perméable au gaz.

6. Dispositif selon l'une des revendications précédentes, **caractérisé en ce que** l'élément structurel (51) comprend une plaque de support (63).

7. Dispositif selon la revendication 6, **caractérisé en ce que** la plaque de support (63) présente un revêtement en film mince (65).

8. Procédé pour la fabrication par couches d'objets tridimensionnels à partir d'un liquide polymérisable pour lequel
- le liquide polymérisable (23, 43) est polymérisé et durci entre une plateforme de support (25, 45) et un élément structurel (31, 51) avec un premier côté et un second côté (53, 55) et
- la plateforme de support (25, 45) est déplacée en s'éloignant de l'élément structurel (31, 51) pendant le montage de l'objet,
- le liquide polymérisable (23, 43) est mis à disposition dans un bac (22, 42),
- l'élément structurel (31, 51) est irradié avec une source de rayons (24, 44) sur le second côté (55) éloigné de la plateforme de support (25, 45) pour polymériser les couches d'objet (30, 50) et
- le bac (42) est placé en dessous de l'élément structurel (51) et la plateforme de support (45) est déplacée, pendant le montage par couche de l'objet (46), en direction du fond (48) du bac (42),
**caractérisé en ce**
**que**, pour le réglage des paramètres optimaux de processus et pour l'homogénéisation du liquide polymérisable (43), le liquide dans le bac (42) est homogénéisé par une unité d'homogénéisation (57) pouvant être tempérée, placée sur la face inférieure du fond (48), et est réglé à une température de processus et la température de l'espace de construction est régulée.

9. Procédé selon la revendication 8, **caractérisé en ce que** la hauteur du bac (42) par rapport à l'élément structurel (51) est réglée pendant la fabrication de l'objet de telle manière que l'élément structurel (51) est positionné au-dessus du niveau de liquide (49) qui se forme dans le bac (42), au niveau de liquide (49) ou dans le liquide (43).

10. Procédé selon l'une des revendications 8 ou 9, **caractérisé en ce qu'**une dépression ou une atmosphère inerte est constituée sur le premier côté (53) de l'élément structurel (51).
